(19) Europäisches Patentamt
European Patent Office
Office européen des brevets

(11) **EP 4 600 518 A1**

(12) **EUROPÄISCHE PATENTANMELDUNG**

(43) Veröffentlichungstag:
**13.08.2025  Patentblatt 2025/33**

(21) Anmeldenummer: **24156464.0**

(22) Anmeldetag: **08.02.2024**

(51) Internationale Patentklassifikation (IPC):
**F16C 33/46** (2006.01)     **F16C 43/06** (2006.01)

(52) Gemeinsame Patentklassifikation (CPC):
**F16C 33/4682; F16C 33/366; F16C 43/065;**
F16C 19/364; F16C 2220/62; F16C 2300/14;
F16C 2360/31

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Aktiebolaget SKF**
**415 50 Göteborg (SE)**

(72) Erfinder:
• **Weigand, Stefan Manfred**
  **97517 Rannungen (DE)**
• **Fritz, Dominik**
  **97074 Würzburg (DE)**
• **Radina, Alfred**
  **97711 Maßbach (DE)**

(74) Vertreter: **Kuhstrebe, Jochen**
**SKF GmbH**
**Gunnar-Wester-Straße 12**
**97421 Schweinfurt (DE)**

(54) **KEGELROLLENLAGER, LAGERKÄFIG FÜR EIN KEGELROLLENLAGER SOWIE EIN VERFAHREN ZUM ZUSAMMENBAUEN DES KEGELROLLENLAGERS**

(57)    Offenbart wird ein Kegelrollenlager (1), mit zumindest einem ersten Ring, zumindest einem zweiten Ring und mehreren Rollen (8), die zwischen dem zumindest einen ersten Ring und dem zumindest einen zweiten Ring angeordnet sind, wobei der erste oder der zweite Ring einen Haltebord (6) aufweist, wobei das Kegelrollenlager weiterhin zumindest einen Lagerkäfig (2) aufweist, der zumindest ein erstes Käfigringelement (10), ein zweites, Käfigringelement (12) und mehrere sich im Wesentlichen in axialer Richtung erstreckende Stege aufweist, wobei die Stege und die Käfigringelemente miteinander verbunden sind, so dass zwischen den Stegen und den Käfigringelementen Taschen zur Aufnahme einer Rolle ausgebildet sind, wobei jede Tasche in axialer Richtung eine Taschenlänge und in Umfangsrichtung eine Taschenbreite aufweist, wobei die Taschenlänge zumindest einer Tasche um einen vorgegebenen Betrag größer als eine axiale Länge ($L_R$) der aufgenommenen Rolle ist, wobei der vorgegebene Betrag so gewählt ist, dass die aufgenommene Rolle so in der Tasche verschiebbar ist, dass der Lagerkäfig zumindest teilweise über den Haltebord bewegbar ist.

Fig. 4

EP 4 600 518 A1

**Beschreibung**

Technisches Gebiet

Vorliegende Erfindung betrifft ein Kegelrollenlager gemäß dem Oberbegriff von Patentanspruch 1. Des Weiteren betrifft die Erfindung einen Lagerkäfig für ein Kegelrollenlager sowie ein Verfahren zum Zusammenbauen eines Kegelrollenlagers.

Technischer Hintergrund

Bei der Montage von rollengeführten Lagerkäfigen für Kegelrollenlager kann es vorkommen, dass die Rollen über einen Halteflansch oder Haltebord des Innenrings geschoben werden müssen. Um dies zu erreichen, kann beispielsweise der Lagerkäfig ein spezielles Taschendesign aufweisen, das ein Kippen der Rolle innerhalb der Tasche ermöglicht. Alternativ kann der Innenring als geteilter Ring ausgebildet sein, so dass beispielsweise der Halteflansch separat montiert werden kann, oder der Lagerkäfig ist als geteilter Ring ausgebildet, der nach der Montage, beispielsweise durch Schweißen, zusammengefügt wird.

All diese Lösungen haben die Nachteile, dass sie einen erheblichen Mehraufwand bei der Herstellung der Lagerkomponenten und/oder beim Zusammenbau des Kegelrollenlagers darstellen.

Es ist deshalb Aufgabe vorliegender Erfindung, ein Kegelrollenlager bereitzustellen, das einfacher hergestellt und/oder zusammengebaut werden kann.

Zusammenfassung der Erfindung

Diese Aufgabe wird durch ein Kegelrollenlager gemäß Patentanspruch 1 gelöst. Ferner wird die Erfindung durch einen Lagerkäfig für ein Kegelrollenlager gemäß Anspruch 9 sowie ein Verfahren zum Zusammenbauen eines Kegelrollenlager gemäß Anspruch 10 gelöst.

Im Folgenden wird ein Kegelrollenlager mit zumindest einem ersten Ring, zumindest einem zweiten Ring und mehreren Rollen, die zwischen den zumindest einen ersten Ring und dem zumindest einen zweiten Ring angeordnet sind, vorgeschlagen wobei der erste oder der zweite Ring ein Haltebord aufweist. Das Kegelrollenlager weist weiterhin zumindest einen Lagerkäfig auf, der zumindest ein erstes Käfigringelement, ein zweites, Käfigringelement und mehrere Stege aufweist, wobei die Stege und die Käfigringelemente miteinander verbunden sind, so dass zwischen den Stegen und den Käfigringelementen Taschen zur Aufnahme einer Rolle ausgebildet sind, wobei jede Tasche in Stegrichtung eine Taschenlänge und in Umfangsrichtung eine Taschenbreite aufweist. Dabei kann das erste Käfigringelement einen kleineren Durchmesser und das zweite Käfigringelement einen größeren Durchmesser haben, so dass das erste Käfigringelement radial weiter innen und das zweite Käfigringelement radial weiter außen angeordnet ist. Durch die unterschiedlichen Durchmesser des ersten und zweiten Käfigringelements können sich die Stege schräg, d.h. sowohl in axialer Richtung als auch radialer Richtung erstrecken und einen Neigungswinkel in Bezug auf eine axiale Richtung des Kegelrollenlagers aufweisen.

Um zu ermöglichen, dass das Kegelrollenlager einfacher hergestellt und zusammengebaut werden kann, ist die Taschenlänge zumindest einer Tasche um einen vorgegebenen Betrag größer als eine axiale Länge der aufgenommenen Rolle, wobei der vorgegebene Betrag so gewählt ist, dass die aufgenommene Rolle so in der Tasche verschiebbar ist, dass der Lagerkäfig zumindest teilweise über den Haltebord geschoben werden kann. Dabei kann die Rolle insbesondere in Stegrichtung verschoben werden.

Das heißt, die Länge der Käfigtasche ist länger als für die regulären Betriebsbedingungen erforderlich ist, so dass ein vergrößerter axialer "Spalt" auf der radial äußeren Käfigseite vorgesehen ist. Beispielsweise kann der vorgegebene Betrag größer als 5mm sein und insbesondere zwischen 5 und 20mm liegen. Bei herkömmlichen Lagerkäfigen kann üblicherweise die Taschenlänge 1-2 mm länger sein als die Länge der Rolle.

Durch die vergrößerte Taschenlänge können während des Zusammenbaus des Kegelrollenlagers die Rollen nach außen an ein außenliegendes Ende der Käfigtasche gedrückt werden, so dass sich der Durchmesser unter einer Stirnseite des innenliegenden Rollenendes vergrößert und das Aufschieben auf den Lagerring mit dem Haltebord ermöglicht. Die Rollen können nun leicht über dem Haltebord des Lagerrings einrasten. Danach kann der Lagerkäfig angehoben werden, bis die Rollen Kontakt mit dem innenliegenden Ende der Käfigtasche haben, so dass sich die Rollen gleichzeitig nach innen bewegen und den Durchmesser unter der innenliegenden Rollenstirnseite verkleinern. Jetzt befinden sich die Rollen in ihrer Zielposition und berühren die Laufbahn des Lagerrings.

Diese vergrößerte Taschenlänge kann insbesondere einen beschädigungsfreien Zusammenbau des Kegelrollenlagers, auch bei schweren Komponenten wie beispielsweise Rollen mit einer großen Masse (z.B. Rollenmassen > 2 kg) und/oder großen Komponenten, wie beispielsweise Rollen mit einer Länge von größer 100mm, ermöglichen. Ferner kann eine erhöhte Selbsthaltesicherheit erreicht werden, da ein Freiraum für die Rollen während des Zusammenbaus größer ist als im Betriebszustand. Außerdem ist ein Zusammenbau der mehreren Rollen bzw. Rollensatzes mit einem minimalem Handhabungsaufwand möglich, da auf ein Drehen des Rollensatzes während der Käfiganordnung verzichtet werden kann. Im Vergleich zu einem geteilten Käfig kann eine höhere Genauigkeit der Käfiggeometrie erreicht werden.

Bevorzugt ist der vorgegebene Betrag der Taschenlänge zumindest abhängig von der axialen Länge der aufgenommenen Rolle, einem Neigungswinkel der Stege bezogen auf eine Rotationsachse des Rollenlagers und/oder einem Durchmesser eines axial innenliegenden Haltebords des Innenrings in radialer Richtung. Insbesondere kann der vorgegebene Betrag $L_{ap}$ mit der folgenden Formel bestimmt werden:

$$L_{ap} = 0{,}5 * (\Phi 2 - \Phi 1) / \sin(\delta),$$

wobei $\delta$ der Neigungswinkel der Stege ist, $\Phi 1$ der Abstand in radialer Richtung zwischen den innenliegenden Stirnseiten bzw. innenliegenden Rollenfasen von zwei radial gegenüberliegenden Rollen, wenn die Rollen am innenliegenden Ende der Tasche angeordnet sind, und $\Phi 2$ der Abstand in radialer Richtung zwischen den innenliegenden Stirnseiten von zwei radial gegenüberliegenden Rollen, wenn die Rollen am außenliegenden Ende der Tasche angeordnet sind. Beispielsweise kann der vorgegebene Betrag größer als 5mm sein und insbesondere zwischen 5 und 20mm liegen.

Gemäß einer weiteren Ausführungsform umfasst das Kegelrollenlager ferner zumindest ein Halteelement, das an einer axialen Außenseite zumindest einer Rolle angeordnet ist und dazu ausgebildet ist, die Taschenlänge axial zu begrenzen. Dadurch kann eine Selbsthaltung des Rollensatzes gewährleistet werden, da die axiale Bewegung der Rollen in der Käfigtasche durch das Halteelement reduziert und/oder eingeschränkt werden kann. Das zumindest eine Halteelement kann ein kompletter Ring, ein geteilter Ring, mehrere separate Teile, Schrauben oder ähnliches sein. Das zumindest eine Halteelement kann formschlüssig, kraftschlüssig (z.B. geschraubt, genietet, etc.) oder fest verbunden (z.B. geschweißt, geklebt, etc.) an dem äußeren Käfigringelement befestigt werden. Auch eine Kombination der Befestigungen ist möglich. Da die Rolle an der axialen Außenseite lediglich mit dem zumindest einen Halteelement in Kontakt steht, ist es möglich, zur Optimierung der Spannungen die Radien der Ecken der Käfigtaschen zu vergrößern, da sie im Betrieb keinen Kontakt zur Rolle haben und daher vergrößert werden können.

Bevorzugt ist zumindest ein Halteelement als durchgängiger Ring ausgebildet. Insbesondere kann der durchgängige Ring zusammen mit dem Lagerkäfig aus einem Teil gedreht werden. Dies ist kostengünstiger als ein separat hergestellter Ring und kann eine höhere Genauigkeit beim Drehen ermöglichen. Beispielsweise kann der durchgängige Ring als geteilter Ring mit einer geringfügig größeren Breite oder Höhe als benötigt gedreht werden. Anschließend kann der Ring geteilt und gekürzt werde und an dem Lagerkäfig montiert werden. Die Geometrie des geteilten Rings kann sich insbesondere dem Lagerkäfig anpassen, so dass kein Spalt oder ähnliches auftritt. Anschließend kann der Ring an dem Lagerkäfig befestigt werden.

Alternativ ist das zumindest eine Halteelement als diskretes Element ausgebildet und erstreckt sich in Umfangsrichtung über zumindest eine Taschenbreite. Bevorzugt sind mehrere diskrete Halteelemente vorgesehen, die über den Umfang, insbesondere gleichmäßig, verteilt angeordnet sind. Insbesondere kann das zumindest eine Halteelement an dem axial äußeren Käfigringelement und/oder an zumindest einer Rolle und/oder an zumindest einem Steg befestigt sein. Falls mehrere Halteelemente verwendet werden, muss nicht jede Käfigtasche mit einem Halteelement ausgerüstet sein. Beispielsweise ist es möglich nur jede zweite, dritte oder vierte Tasche auszurüsten und dennoch die Selbsthalteeigenschaft des Lagerkäfigs zu erhalten. Das Vorsehen von mehreren Halteelementen kann insbesondere günstiger sein als ein durchgängiger Haltering.

Alternativ kann das zumindest eine Halteelement an einer Rolle befestigt sein und/oder ein Teil an der Rolle befestigt werden, um eine Länge der Rolle zu erhöhen. Beispielsweise kann eine Vertiefung an einer Stirnseite der Rolle verwendet werden, um das Halteelement an der Rolle befestigen oder eine Schraube an der Stirnseite der Rolle angebracht werden, um eine axiale Bewegung der Rolle in der Tasche zu begrenzen. Zusätzlich oder alternativ kann die Reduzierung der Käfigtaschenlänge auch durch plastisch verformende Merkmale an den Käfigen erfolgen.

Bevorzugt kann das zumindest eine Halteelement an einer der Rolle zugewandten Seite mit zumindest einem Rollenkontaktelement versehen sein, das dazu ausgelegt ist, einen Kontakt zwischen der Rolle und dem Halteelement herzustellen. Insbesondere kann das Rollenkontaktelement einen Kontakt zwischen der axial äußeren Stirnseite der Rolle und dem zumindest einen Halteelement und/oder Käfig verbessern. Beispielsweise kann das zumindest eine Rollenkontaktelement ein Profil auf dem zumindest einen Halteelement sein. Insbesondere kann das zumindest eine Rollenkontaktelement eine bessere Oberflächenqualität und/oder Oberflächenbehandlung und/oder eine spezielle optimierte Geometrie und/oder ein anderes Material als der Lagerkäfig und/oder das zumindest Halteelement haben. Das zumindest eine Rollenkontaktelement kann einstückig oder separat mit dem zumindest einen Halteelement gebildet sein.

Weiterhin kann das zumindest eine Halteelement aus Metall und/oder Kunststoff hergestellt ist. Beispielsweise kann das zumindest eine Halteelement und der Lagerkäfig aus demselben Material zusammen gefertigt sein. Das zumindest eine Halteelement kann zusammen mit dem Lagerkäfig aus einem gemeinsamen Grundmaterialstück gedreht und anschließend getrennt werden. Dies hat Qualitäts- und Kostenvorteile.

Gemäß einem weiteren Aspekt ist ein Lagerkäfig für ein voranstehend beschriebenes Kegelrollenlager bereitgestellt. Dabei umfasst der Lagerkäfig zumindest ein erstes Käfigringelement, ein zweites Käfigringelement und mehrere Stege, wobei die Stege und die Käfigringelemente miteinander verbunden sind, so dass zwischen den Stegen und den Käfigringelementen Taschen zur Aufnahme einer Rolle ausgebildet sind, wobei jede Tasche in Stegrichtung eine Taschenlänge und in Umfangsrichtung eine Taschenbreite aufweist. Dabei kann das erste Käfigringelement einen kleineren Durchmesser und das zweite Käfigringelement einen größeren Durchmesser haben, so dass das erste Käfigringelement radial weiter innen und das zweite Käfigringelement radial weiter außen angeordnet ist. Durch die unterschiedlichen Durchmesser des ersten und zweiten Käfigringelements können sich die Stege schräg, d.h. sowohl in axialer Richtung als auch radialer Richtung erstrecken und einen Neigungswinkel in Bezug auf eine axiale Richtung des Kegelrollenlagers aufweisen.

Um zu ermöglichen, dass der Lagerkäfig einfach hergestellt und in dem Kegelrollenlager montiert werden kann, ist die Taschenlänge zumindest einer Tasche um einen vorgegebenen Betrag größer als eine axiale Länge der aufnehmbaren Rolle, wobei der vorgegebene Betrag so gewählt ist, dass die aufnehmbare Rolle in axialer Richtung so in der Tasche verschiebbar ist, dass der Lagerkäfig zumindest teilweise über den Haltebord bewegbar bzw. anhebbar ist.

Gemäß einem weiteren Aspekt ist ein Verfahren zum Zusammenbauen eines voranstehend beschriebenen Kegelrollenlagers bereitgestellt, wobei das Verfahren die folgenden Schritte umfasst:

Bereitstellen eines voranstehend beschriebenen Lagerkäfigs,

Bereitstellen eines Lagerrings, wobei der Lagerring einen Haltebord aufweist,

Bereitstellen von mehreren Rollen,

Einsetzen der Rollen in die Taschen des Lagerkäfigs,

Verschieben der Rollen in den Taschen des Lagerkäfigs, so dass sich die Rollen an einem äußern Ende der Taschen befinden,

Aufschieben des Lagerkäfigs auf den Lagerring,

Verschieben der Rollen in den Taschen des Lagerkäfigs, so dass sich die Rollen an einem inneren Ende der Taschen befinden und an einem inneren Bord des Innenrings anliegen, und

Anordnen zumindest eines Halteelements an einer Außenseite zumindest einer Rolle, um die Taschenlänge, insbesondere axial, zu begrenzen.

Durch die vergrößerte Taschenlänge kann während des Zusammenbaus des Kegelrollenlagers die Rollen nach außen an das äußere Ende der Käfigtasche gedrückt werden, so dass sich der Durchmesser unter einer Stirnseite des innenliegenden Rollenendes vergrößert und das Aufschieben auf den Lagerring mit dem Haltebord ermöglicht. Die Rolle kann nun leicht über dem Haltebord des Lagerrings einrasten. Danach kann der Lagerkäfig angehoben werden, bis die Rollen Kontakt mit dem innenliegenden Ende der Käfigtasche haben, so dass sich die Rollen gleichzeitig nach innen bewegen und den Durchmesser unter der innenliegenden Rollenstirnseite verkleinern. Jetzt befinden sich die Rollen in ihrer Zielposition und berühren die Laufbahn des Lagerrings.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Kurze Figurenbeschreibung

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:

Fig. 1: einen Lagerkäfig eines Kegelrollenlagers gemäß einer ersten Ausführungsform, wobei die Rollen in einer ersten Position angeordnet sind,

Fig. 2: der Lagerkäfig eines Kegelrollenlagers gemäß der ersten Ausführungsform, wobei die Rollen in einer zweiten Position angeordnet sind,

Fig. 3: das Kegelrollenlager mit dem Lagerkäfig gemäß der ersten Ausführungsform, wobei die Rollen in der zweiten Position angeordnet sind,

Fig. 4: das Kegelrollenlager mit dem Lagerkäfig gemäß der ersten Ausführungsform, wobei die Rollen in der ersten Position angeordnet sind,

Fig. 5: den Ausschnitt Ader Fig. 3 in einem vergrößerten Maßstab,

Fig. 6 und 7: einen Lagerkäfig gemäß einer zweiten Ausführungsform,

Fig. 8: einen Lagerkäfig gemäß einer dritten Ausführungsform,

Fig. 9: einen Lagerkäfig gemäß einer vierten Ausführungsform,

Fig. 10: einen Lagerkäfig gemäß einer fünften Ausführungsform,

Fig. 11: den Ausschnitt C der Fig. 10 in einem vergrößerten Maßstab,

Fig. 12: den Ausschnitt D der Fig. 11 in einem vergrößerten Maßstab,

Fig. 13: ein Halteelement für den Lagerkäfig der Fig. 10 - 12, und

Fig. 14: ein Flussdiagramm eines Verfahrens zum Zusammenbauen eines Kegelrollenlagers gemäß einer vierten Ausführungsform.

Detaillierte Beschreibung der Erfindung

Im Folgenden werden gleiche oder funktionell gleichwirkende Elemente mit denselben Bezugszeichen gekennzeichnet.

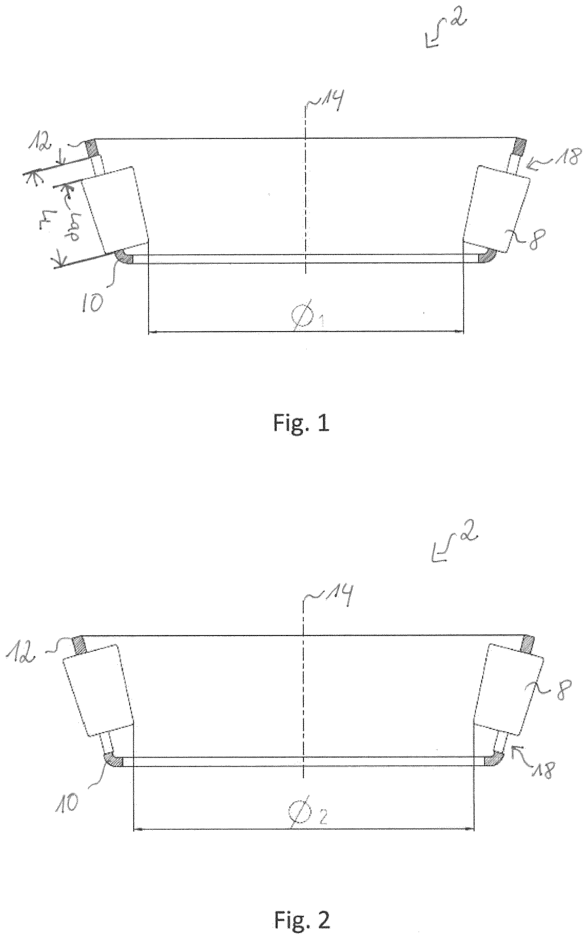

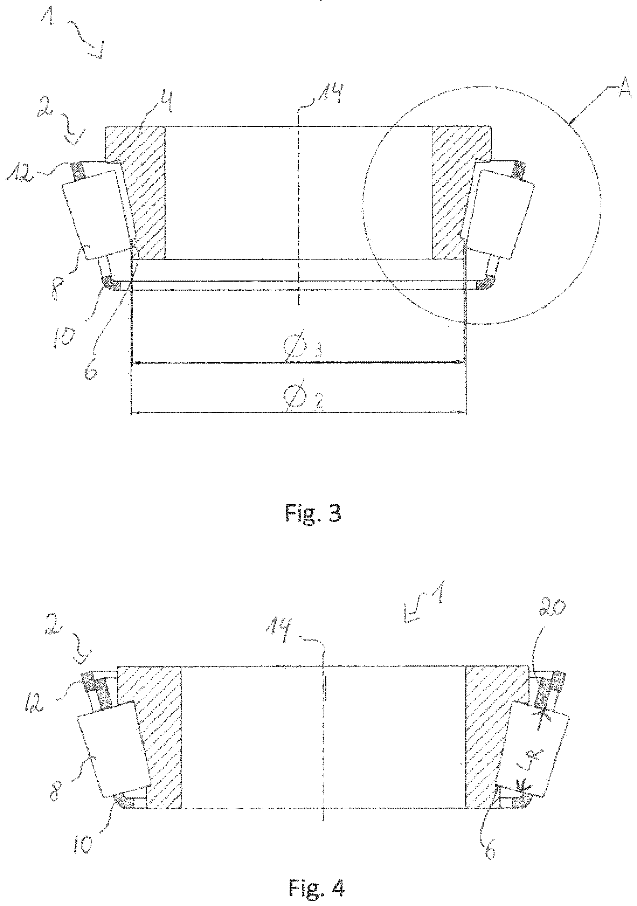

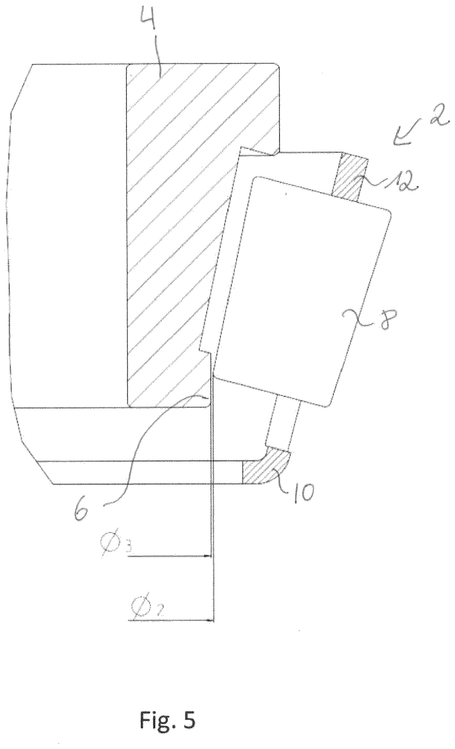

Fig. 1 bis 5 zeigen ein Kegelrollenlager 1 mit einem Lagerkäfig 2 gemäß einer ersten Ausführungsform. Das Kegelrollenlager 1 umfasst einen ersten Ring 4 (Fig. 3 bis 5), einen zweiten Ring (nicht gezeigt) und mehreren Rollen 8, die zwischen dem ersten Ring 4 und dem zweiten Ring angeordnet sind, wobei der erste Ring 4 einen Haltebord 6 aufweist.

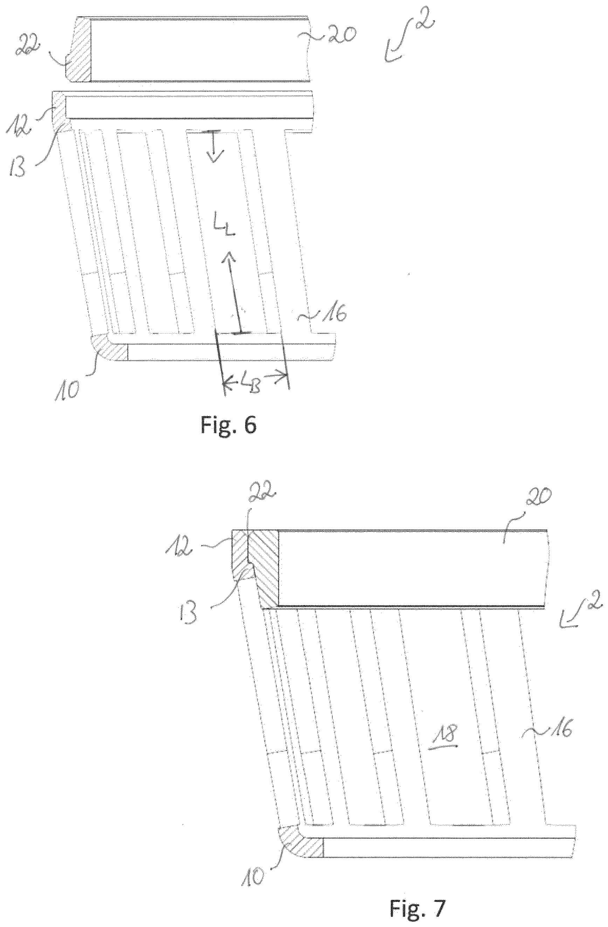

Der Lagerkäfig 2 umfasst ein erstes Käfigringelement 10, ein zweites Käfigringelement 12 und mehreren sich im Wesentlichen in axialer Richtung 14 erstreckende Stege 16, wobei die Stege 16 und die Käfigringelemente 10, 12 miteinander verbunden sind, so dass zwischen den Stegen 16 und den Käfigringelementen 10, 12 Taschen 18 (Fig. 6, 7) zur Aufnahme einer Rolle 8 ausgebildet sind, wobei jede Tasche 18 in Richtung des Steges 16 eine Taschenlänge $L_L$ und in Umfangsrichtung eine Taschenbreite $L_B$ aufweist.

Wie in den Fig. 1 bis 5 gesehen werden kann, hat das erste Käfigringelement 10 einen kleineren Durchmesser und das zweite Käfigringelement 12 einen größeren Durchmesser, so dass das erste Käfigringelement 10 radial weiter innen und das zweite Käfigringelement 12 radial weiter außen angeordnet ist. Durch die unterschiedlichen Durchmesser des ersten und zweiten Käfigringelements 10, 12 erstrecken sich die Stege 16 schräg, d.h. sowohl in axialer Richtung als auch radialer Richtung, und haben einen Neigungswinkel δ in Bezug auf die axiale Richtung 14 des Kegelrollenlagers. Das Ende der Tasche 16, das durch das erste Käfigringelement 10 begrenzt wird, liegt dabei innen und wird daher auch als innenliegendes Ende bezeichnet, während das Ende der Tasche 16, das durch das zweite Käfigringelement 12 begrenzt wird, außen liegt und auch als außenliegendes Ende bezeichnet wird.

Die Taschenlänge $L_L$ der Taschen 18 ist um einen vorgegebenen Betrag $L_{ap}$ größer als eine axiale Länge $L_R$ der aufgenommenen Rolle 8. Der vorgegebene Betrag $L_{ap}$ ist so gewählt, dass die aufgenommene Rolle 8 in axialer Richtung während des Zusammenbaus des Kegelrollenlagers 1 nach außen an das axial äußere Ende der Käfigtasche 18 gedrückt werden kann. Fig. 1 und 4 zeigen dabei einen Zustand, bei dem die Rollen 8 an einem axial innenliegenden Ende des Käfigs 2 positioniert sind, wohingegen Fig. 2 und 3 einen Zustand zeigen, bei dem die Rollen 8 an einem aufgrund der schrägverlaufenden Stege 16 radial und axial außenliegenden Ende des Käfigs 2 positioniert sind. Indem die Rollen 8 an das außenliegende Ende geschoben werden, kann der Durchmesser unter einer Stirnseite des innenliegenden Rollenendes von Φ1 (Fig. 1) auf Φ2 (Fig. 2) vergrößert werden. Dies erleichtert das Aufschieben des Lagerkäfigs 2 auf den Lagerring 4 über den Haltebord 6, der in radialer Richtung einen Durchmesser Φ3 (Fig. 3) aufweist. Danach kann der Lagerkäfig 2 angehoben werden, bis die Rollen 8 Kontakt mit dem innenliegenden Ende der Käfigtasche 18 (Fig. 4) haben, so dass sich die Rollen 8 gleichzeitig nach innen bewegen und den Durchmesser unter der innenliegenden Rollenstirnseite verkleinern.

Mit anderen Worten ist die Länge $L_L$ der Käfigtasche 18 länger als für die regulären Betriebsbedingungen erforderlich ist, so dass ein vergrößerter "Spalt" auf der axial äußeren Käfigseite vorgesehen ist. Beispielsweise kann der vorgegebene Betrag $L_{ap}$ größer als 5mm sein und insbesondere zwischen 5 und 20mm liegen.

Der vorgegebene Betrag $L_{ap}$ kann mit der folgenden Formel bestimmt werden:

$$L_{ap} = 0{,}5 * (\Phi 2 - \Phi 1) / \sin(\delta),$$

wobei δ der Neigungswinkel der Stege ist. Insbesondere muss Φ2 nicht größer sein als ein Durchmesser Φ3 des Haltebords 6 in radialer Richtung, da das Einrasten nicht konzentrisch erfolgen muss. Wenn der Lagerring leicht geneigt ist, kann der Lagerkäfig zuerst auf einer Seite einrasten, was die notwendige Differenz zwischen dem Innendurchmesser der Rollenfase und einer Schulter des Haltebords verringert.

Nachdem der Lagerkäfig 2 mit den Rollen 8 auf dem Ring 4 montiert ist und die Rollen 8 wieder an dem axial innenliegenden Ende positioniert sind, wird an der axialen Außenseite der Rollen 8 ein Halteelement 20 (Fig. 4) angeordnet, um die Taschenlänge $L_L$ wieder axial zu begrenzen.

Das Halteelement 20 ist in der ersten Ausführungsform als durchgängiger Ring ausgebildet. Beispielsweise kann der durchgängige Ring zusammen mit dem Lagerkäfig 2 aus einem Teil gedreht werden. Dies ist kostengünstiger als ein separat hergestellter Ring und kann eine höhere Genauigkeit beim Drehen ermöglichen. In der ersten Ausführungsform ist das Halteelement 20 an dem zweiten Käfigringelement 12 angeschweißt.

Bevorzugt kann das Halteelement 20 an einer der Rolle 8 zugewandten Seite mit zumindest einem Rollenkontaktelement (nicht gezeigt) versehen sein, das dazu ausgelegt ist, einen Kontakt zwischen der Rolle 8 und dem Halteelement 20 herzustellen. Insbesondere kann das Rollenkontaktelement einen Kontakt zwischen der axial äußeren Stirnseite der Rolle 8 und dem Halteelement 20 und/oder Käfig 2 verbessern. Insbesondere kann das Rollenkontaktelement eine bessere Oberflächenqualität und/oder Oberflächenbehandlung und/oder eine spezielle optimierte Geometrie und/oder ein anderes Material als der Lagerkäfig 2 und/oder das Halteelement 20 haben. Das Rollenkontaktelement kann einstückig oder separat mit dem zumindest einen Halteelement gebildet sein.

Fig. 6 und 7 zeigen einen Lagerkäfig 2 gemäß einer zweiten Ausführungsform. Der Lagerkäfig 2 der zweiten Ausführungsform unterscheidet sich von dem Lagerkäfig 2 der ersten Ausführungsform dadurch, dass das Halteelement 20 eine Auskragung 22 aufweist und das zweite Käfigringelement 12 ebenfalls eine Auskragung 13 aufweist, die dazu ausgebildet sind, so zusammenzuwirken, dass die Positionierung des Halteelements 20 an dem zweiten Käfigringelement 12 auf eine definierte Weise erfolgt, so dass eine definierte Taschenlänge $L_L$ gewährleistet werden kann. Zusätzlich ermöglichen die beiden Auskragungen 13, 22 das Halteelement 20 zu zentrieren. Durch die definierte Positionierung des Halteelements 20 an dem zweiten Käfigringelement 12, die durch die beiden Auskragungen 13, 22 ermöglicht wird, kann das Halteelement 20 beispielsweise durch Schweißen entlang einer Linie entlang des Umfangs zwischen Halteelement 20 und Käfigringelement 12 befestigt werden (Fig. 7).

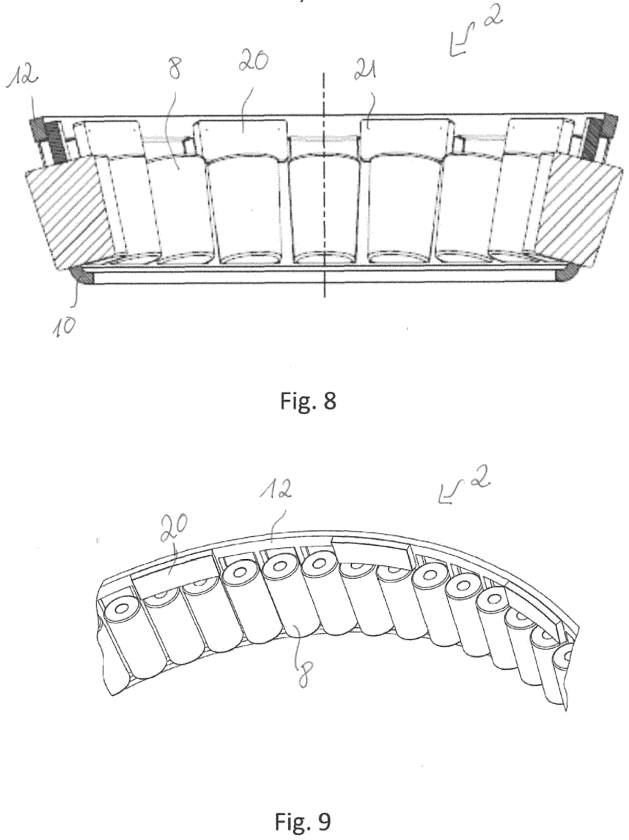

Fig. 8 zeigt einen Lagerkäfig 2 gemäß einer dritten Ausführungsform. Der Lagerkäfig 2 der dritten Ausführungsform unterscheidet sich von dem Lagerkäfig 2 der ersten Ausführungsform dadurch, dass das Halteelement 20 nicht als durchgängiger Ring ausgebildet ist, sondern als mehrere diskrete Elemente, die sich in Umfangsrichtung über zumindest eine Taschenbreite $L_B$ erstrecken, die über den Umfang gleichmäßig verteilt angeordnet sind, wobei nicht jede Käfigtasche 18 mit einem Halteelement 20 ausgerüstet ist, sondern jede zweite. Wie in Fig. 8 gesehen werden kann, sind die Halteelemente 20 an dem äußeren Käfigringelement 12 mit einem Befestigungsmittel 21 befestigt. Das Befestigungsmittel 21 kann beispielsweise eine Schraube sein. Alternativ können die Halteelemente 20 auch an den Rollen 8 befestigt werden.

Fig. 9 zeigt einen Lagerkäfig 2 gemäß einer vierten Ausführungsform. Der Lagerkäfig 2 der vierten Ausführungsform unterscheidet sich von dem Lagerkäfig 2 der dritten Ausführungsform dadurch, dass das Halteelement 20 sich in Umfangsrichtung über zwei Taschenbreite $L_B$ erstrecken, die über den Umfang gleichmäßig verteilt angeordnet sind, wobei zwischen zwei Halteelementen 20 jeweils drei Taschenbreiten nicht mit einem Halteelement 20 ausgerüstet sind.

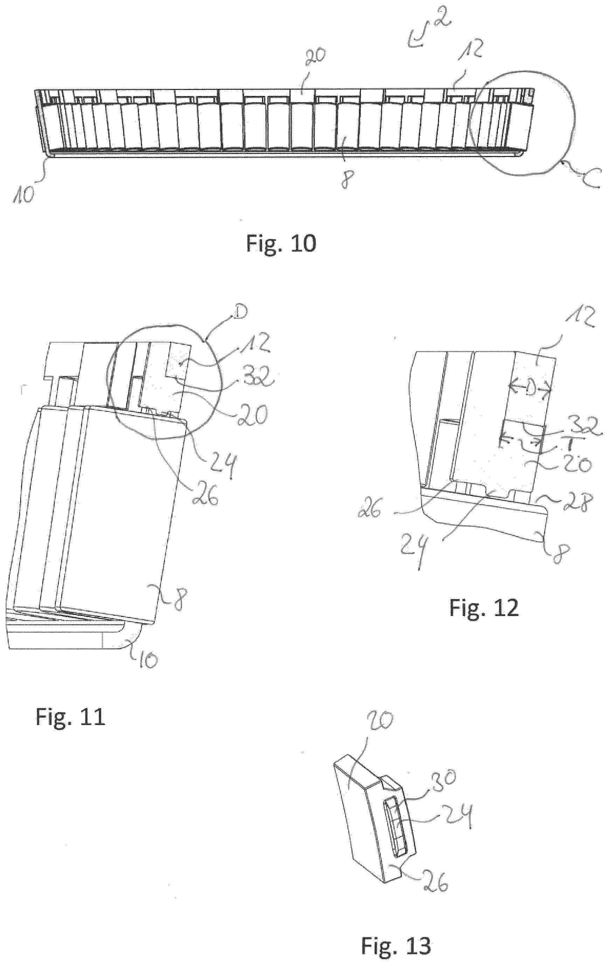

Fig. 10 bis 13 zeigen einen Lagerkäfig 2 gemäß einer fünften Ausführungsform. Der Lagerkäfig 2 der fünften Ausführungsform unterscheidet sich von dem Lagerkäfig 2 der ersten Ausführungsform dadurch, dass das Halteelement 20 nicht als durchgängiger Ring ausgebildet ist, sondern als mehrere diskrete Elemente, die sich in Umfangsrichtung über zumindest eine Taschenbreite $L_B$ erstrecken, die über den Umfang gleichmäßig verteilt angeordnet sind, wobei nicht jede Käfigtasche 18 mit einem Halteelement 20 ausgerüstet ist, sondern jede dritte.

Darüber hinaus weisen die Halteelement 20 bei dem Lagerkäfig 2 der fünften Ausführungsform an einer der Rolle 8 zugewandten Seite 26 zumindest ein Rollenkontaktelement 24 auf, das dazu ausgelegt ist, einen Kontakt zwischen der Rolle 8 und dem Halteelement 20 herzustellen. Beispielsweise kann das Rollenkontaktelement 24 einen Kontakt zwischen der axial äußeren Stirnseite 28 der Rolle 8 und dem Halteelement 20 und/oder Käfig 2 verbessern. Dazu ist das Rollenkontaktelement 20 mit einem Profil 30 (Fig. 13) versehen. Insbesondere kann das Rollenkontaktelement 24 eine bessere Oberflächenqualität und/oder eine bessere Oberflächenbehandlung und/oder eine spezielle optimierte Geometrie und/oder ein anderes Material als der Lagerkäfig 2 und/oder das Halteelement 20 aufweisen. Wie in den Fig. 11 bis 13 gesehen werden kann, ist das Rollenkontaktelement 24 einstückig mit dem Halteelement 20 gebildet. Alternativ kann das Rollenkontaktelement auch separat von dem Halteelement 20 gebildet sein.

Wie in Fig. 11 und 12 gesehen werden kann, ist das Halteelemente 20 mit einer Stufe 32 versehen, wobei eine radiale Tiefe T der Stufe 32 so gewählt ist, dass eine Dicke D des zweiten Käfigringelements 12 im Wesentlichen in der Aussparung aufgenommen werden kann, die durch die Stufe 32 gebildet ist. Dies ermöglicht, dass die Verbindung zwischen dem Halteelement 20 und dem Käfigringelement 12 nicht auf Scherung beansprucht wird.

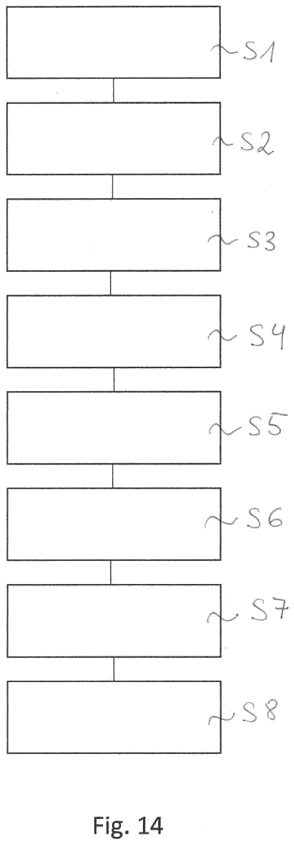

Fig. 14 zeigt ein Flussdiagramm eines Verfahrens zum Zusammenbauen eines Kegelrollenlagers 1. Das Verfahren umfasst in den Schritt S1, S2 und S3 ein Bereitstellen des Lagerkäfigs 2, ein Bereitstellen eines Lagerrings 4, wobei der Lagerring ein Haltebord 6 aufweist, und das Bereitstellen von mehreren Rollen 8. Anschließend werden die Rollen 8 in einem Schritt S4 in die Taschen 18 des Lagerkäfigs 2 eingesetzt.

Anschließend werden in einem Schritt S5 die Rollen 8 in den Taschen 18 des Lagerkäfigs 2 verschoben, so dass sich die Rollen 8 an einem äußern Ende der Taschen 18 befinden. Durch die vergrößerte Taschenlänge $L_L$ kann während des Zusammenbaus des Kegelrollenlagers 1 die Rollen 8 nach außen an das äußere Ende der Käfigtasche 18 gedrückt werden, so dass sich der Durchmesser unter einer Stirnseite des innenliegenden Rollenendes vergrößert.

Dies ermöglicht im nächsten Schritt S6 ein Aufschieben des Lagerkäfigs 2 auf den Lagerring 4. Die Rollen 8 können nun leicht über dem Haltebord 6 des Lagerrings 4 einrasten. Danach kann der Lagerkäfig 2 angehoben werden, bis die Rollen in einem Schritt S7 Kontakt mit dem innenliegenden Ende der Käfigtasche haben, so dass sich die Rollen gleichzeitig nach innen bewegen und den Durchmesser unter der innenliegenden Rollenstirnseite verkleinern. Jetzt befinden sich die Rollen in ihrer Zielposition und berühren die Laufbahn des Lagerrings.

Schließlich wird in einem letzten Schritt S8 das Halteelement 20 an einer Außenseite der Rolle 8, um die Taschenlänge zu begrenzen.

Zusammenfassend kann durch die vergrößerte Taschenlänge insbesondere ein beschädigungsfreier Zusammenbau des Kegelrollenlagers, auch bei schweren Komponenten wie beispielsweise Rollen mit einer großen Masse (z.B. Rollenmassen > 2kg), ermöglicht werden. Ferner kann eine erhöhte Selbsthaltesicherheit erreicht werden, da ein Freiraum für die Rollen während des Zusammenbaus größer ist als im Betriebszustand. Außerdem ist ein Zusammenbau der mehreren Rollen bzw. Rollensatzes mit einem minimalem Handhabungsaufwand möglich, da auf ein Drehen bzw. Wenden des Innenrings, des Rollensatzes und/oder des Käfigs während der Käfiganordnung verzichtet werden kann. Im Vergleich zu einem geteilten Käfig kann eine höhere Genauigkeit der Käfiggeometrie erreicht werden.

**Bezugzeichenliste**

| | |
|---|---|
| 1 | Kegelrollenelement |
| 2 | Lagerkäfig |
| 4 | Lagerring |
| 6 | Haltebord |
| 8 | Rolle |
| 10, 12 | Käfigringelement |
| 14 | axiale Richtung |
| 16 | Stege |
| 18 | Tasche |
| 20 | Halteelement |
| 21 | Befestigungselement |
| 13, 22 | Auskragung |
| 24 | Rollenkontaktelement |
| 26 | Seite |
| 28 | Stirnseite |
| 30 | Profil |
| 32 | Stufe |
| $L_L$ | Taschenlänge |
| $L_B$ | Taschenbreite |
| $L_{ap}$ | vorgegebener Betrag |
| $L_R$ | axiale Rollenlänge |
| T | Schultertiefe |
| D | Käfigringelementdicke |
| $\delta$ | Neigungswinkel der Stege |
| $\Phi1, \Phi2$ | Abstand in radialer Richtung zwischen den Rollenfasen |
| $\Phi3$ | Außendurchmesser Haltebord |
| S1 ... S8 | Verfahrensschritte |

**Patentansprüche**

1. Kegelrollenlager (1), mit zumindest einem ersten Ring (4), zumindest einem zweiten Ring und mehreren Rollen (8), die zwischen dem zumindest einen ersten Ring (4) und dem zumindest einen zweiten Ring angeordnet sind, wobei der erste oder der zweite Ring (4) einen Haltebord (6) aufweist, wobei das Kegelrollenlager (1) weiterhin zumindest einen Lagerkäfig (2) aufweist, der zumindest ein erstes Käfigringelement (10), ein zweites Käfigringelement (12) und mehrere Stege (16) aufweist, wobei die Stege (16) und die Käfigringelemente (10, 12) miteinander verbunden sind, so dass zwischen den Stegen (16) und den Käfigringelementen (10, 12) Taschen (18) zur Aufnahme einer Rolle (8) ausgebildet sind, wobei jede Tasche (18) in Stegrichtung eine Taschenlänge ($L_L$) und in Umfangsrichtung eine Taschenbreite ($L_B$) aufweist,
**dadurch gekennzeichnet, dass**
die Taschenlänge ($L_L$) zumindest einer Tasche (18) um einen vorgegebenen Betrag ($L_{ap}$) größer als eine axiale Länge ($L_R$) der aufgenommenen Rolle (8) ist, wobei der vorgegebene Betrag ($L_{ap}$) so gewählt ist, dass die aufgenommene Rolle (8) so in der Tasche (18) verschiebbar ist, dass der Lagerkäfig (2) zumindest teilweise über den Haltebord (6) bewegbar ist.

2. Kegelrollenlager (1) gemäß Anspruch 1, wobei der vorgegebene Betrag ($L_{ap}$) der Taschenlänge ($L_L$) zumindest abhängig von der axialen Länge ($L_L$) der aufgenommenen Rolle (8), einem Neigungswinkel ($\delta$) der Stege (16) bezogen auf eine Rotationsachse des Kegelrollenlagers (1) und/oder einem Durchmesser ($\Phi3$) des axial innenliegenden Haltebords (6) des Rings (4) in radialer Richtung ist.

3. Kegelrollenlager (1) gemäß Anspruch 1 oder 2, ferner umfassend zumindest ein Halteelement (20), das an einer axialen Außenseite zumindest einer Rolle (8) angeordnet ist und dazu ausgebildet ist, die Taschenlänge ($L_L$) axial zu begrenzen.

4. Kegelrollenlager (1) gemäß einem der Ansprüche 1 bis 3, wobei das zumindest eine Halteelement (20) als durchgängiger Ring ausgebildet ist.

5. Kegelrollenlager (1) gemäß einem der Ansprüche 1 bis 3, wobei das zumindest eine Halteelement (20) als diskretes Element ausgebildet ist und sich in Umfangsrichtung über zumindest eine Taschenbreite ($L_B$) erstreckt, wobei bevorzugt mehrere diskrete Halteelement (20) vorgesehen sind, die über den Umfang, insbesondere gleichmäßig, verteilt angeordnet sind.

6. Kegelrollenlager (1) gemäß einem der Ansprüche 3 bis 5, wobei das zumindest eine Halteelement (20) an dem zweiten Käfigringelement (12) und/oder an zumindest einer Rolle (8) und/oder an zumindest einen Steg (16) befestigt ist.

7. Kegelrollenlager (1) gemäß einem der Ansprüche 3 bis 6, wobei das zumindest eine Halteelement (20) an einer der Rolle (8) zugewandten Seite (26) mit zumindest einem Rollenkontaktelement (24) versehen ist, das dazu ausgelegt ist, einen Kontakt zwischen der Rolle (8) und dem Halteelement (20) herzustellen.

8. Kegelrollenlager (1) gemäß einem der vorherigen Ansprüche, wobei das zumindest eine Halteelement (20) aus Metall und/oder Kunststoff hergestellt ist.

9. Lagerkäfig für ein Kegelrollenlager (1) gemäß einem der vorherigen Ansprüche.

10. Verfahren zum Zusammenbauen eines Kegelrollenlager (1) gemäß einem der Ansprüche 1 bis 8, wobei das Verfahren die Folgenden Schritte umfasst:

Bereitstellen (S 1) eines Lagerkäfigs (2) nach Anspruch 9,
Bereitstellen (S2) eines Lagerrings (4), wobei der Lagerring (4) einen Haltebord (6) aufweist,
Bereitstellen (S3) von mehreren Rollen (8),
Einsetzen (S4) der Rollen (8) in die Taschen (18) des Lagerkäfigs (2),
Verschieben (S5) der Rollen (8) in den Taschen (18) des Lagerkäfigs (2), so dass sich die Rollen (8) an einem äußern Ende der Taschen (18) befinden,
Aufschieben (S6) des Lagerkäfigs (2) auf den Lagerring (4),
Verschieben (S7) der Rollen (8) in den Taschen (18) des Lagerkäfigs (2), so dass sich die Rollen (8) an einem inneren Ende der Taschen (18) befinden und an einem inneren Haltebord (6) des Lagerrings (4) anliegen, und
Anordnen (S8) zumindest eines Halteelements (20) an einer Außenseite zumindest einer Rolle (8), um die Taschenlänge ($L_L$) zu begrenzen.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

**Europäisches Patentamt**
**European Patent Office**
**Office européen des brevets**

# EUROPÄISCHER RECHERCHENBERICHT

**Nummer der Anmeldung**

EP 24 15 6464

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2005 047270 B4 (SCHAEFFLER TECHNOLOGIES AG [DE]) 10. März 2016 (2016-03-10) * Absatz [0011] - Absatz [0012] * ----- | 1-10 | INV. F16C33/46 F16C43/06 |
| X | DE 10 2015 205745 A1 (SKF AB [SE]) 6. Oktober 2016 (2016-10-06) * Abbildungen 2-8 * ----- | 1-5,7-10 | |
| X | US 11 143 240 B2 (JTEKT CORP [JP]) 12. Oktober 2021 (2021-10-12) * Spalte 5, Zeilen 45-58; Abbildungen 1-8 * ----- | 1,9 | |
| A | DE 10 2014 224107 A1 (SKF AB [SE]) 2. Juni 2016 (2016-06-02) * Abbildungen 1-10 * ----- | 3-8 | |
| A | CN 116 221 281 A (JM BEARING GROUP CO LTD) 6. Juni 2023 (2023-06-06) * Abbildungen 1-8 * ----- | 3-8 | RECHERCHIERTE SACHGEBIETE (IPC) |
| A | JP 2013 104483 A (NTN TOYO BEARING CO LTD) 30. Mai 2013 (2013-05-30) * Abbildung 3 * ----- | 3-8 | F16C |

Der vorliegende Recherchenbericht wurde für alle Patentansprüche erstellt

| Recherchenort | Abschlußdatum der Recherche | Prüfer |
|---|---|---|
| Den Haag | 27. Juni 2024 | Hutter, Manfred |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 15 6464

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-06-2024

| Im Recherchenbericht angeführtes Patentdokument | Datum der Veröffentlichung | Mitglied(er) der Patentfamilie | Datum der Veröffentlichung |
|---|---|---|---|
| DE 102005047270 B4 | 10-03-2016 | CN 101278135 A | 01-10-2008 |
| | | DE 102005047270 A1 | 05-04-2007 |
| | | EP 1929165 A1 | 11-06-2008 |
| | | JP 2009510376 A | 12-03-2009 |
| | | US 2008226214 A1 | 18-09-2008 |
| | | WO 2007038913 A1 | 12-04-2007 |
| DE 102015205745 A1 | 06-10-2016 | KEINE | |
| US 11143240 B2 | 12-10-2021 | CN 112145550 A | 29-12-2020 |
| | | DE 102020116724 A1 | 31-12-2020 |
| | | JP 7263944 B2 | 25-04-2023 |
| | | JP 2021004665 A | 14-01-2021 |
| | | US 2020408260 A1 | 31-12-2020 |
| DE 102014224107 A1 | 02-06-2016 | DE 102014224107 A1 | 02-06-2016 |
| | | WO 2016083184 A1 | 02-06-2016 |
| CN 116221281 A | 06-06-2023 | KEINE | |
| JP 2013104483 A | 30-05-2013 | JP 6012952 B2 | 25-10-2016 |
| | | JP 2013104483 A | 30-05-2013 |

EPO FORM P0461

Für nähere Einzelheiten zu diesem Anhang : siehe Amtsblatt des Europäischen Patentamts, Nr.12/82